# EUROPEAN PATENT SPECIFICATION

(11) **EP 1 211 922 B1**
(45) Date of publication and mention of the grant of the patent: **28.01.2004**
(21) Application number: 00964779.3
(22) Date of filing: 13.09.2000
(51) Int. Cl.: A01B 3/421

(54) **VALVE ASSEMBLY, IN PARTICULAR FOR A HYDRAULIC PLOUGH TURNING DEVICE**
KLAPPENSATZ, INSBESONDERE FÜR EINE HYDRAULISCHE PFLUGSCHWENKVORRICHTUNG
ENSEMBLE SOUPAPE DESTINE EN PARTICULIER A UN DISPOSITIF PERMETTANT DE TOURNER UNE CHARRUE REVERSIBLE

(30) Priority: 17.09.1999 NL 1013077
(43) Date of publication of application: 12.06.2002
(73) Proprietor: Actuant Corporation, Glendale, Wisconsin 53209-3703 (US)
(72) Inventor: BELD, Peter, Everhardus, Johannes, NL-7637 PC Oud Ootmarsum (NL); KOOISTRA, Ronald, NL - 7521 ZS Enschede (NL); LEBLANC, Jacobus, Johannes, Josephus, Ronald, NL-7572 AW Oldenzaal (NL)
(74) Representative: Brookhuis, Hendrik Jan Arnold
(86) International application number: PCT/NL2000/000650
(87) International publication number: WO 2001/020970

(56) References cited:
- EP-A- 0 890 748
- DE-A- 2 716 262
- DE-A- 3 212 285
- FR-A- 992 359
- US-A- 3 385 166

## Description

The invention relates to a valve assembly for automatically reversing the direction of movement of an actuator which is operated by a pressure medium, in particular hydraulic fluid.

In particular, the present invention provides for the use of the valve assembly as a component of a hydraulic operating device for a reversible plough.

In the agricultural sector, so-called reversible ploughs are in widespread use. A reversible plough is attached to a tractor by means of a structure which makes it possible to plough on either of the two sides of the tractor as desired. The plough can rotate about a reversing shaft which usually extends substantially horizontally and in the longitudinal direction of the tractor. In the case of large and heavy ploughs, it is customary for the plough firstly to be moved into a position which corresponds to a narrow plough width before the plough is rotated about its reversing shaft. After it has been reversed, the plough is set back to the desired plough width.

The two abovementioned main movements of the reversible plough are usually realized by means of a hydraulic operating device with associated actuators, in particular double-acting hydraulic cylinders. The pressurized hydraulic fluid which is to be supplied to these cylinders is usually supplied by a hydraulic pump unit which is present on the tractor and comprises, inter alia, a pump and a reservoir.

Known hydraulic operating devices for reversible ploughs with one or more reversing cylinders and, if appropriate, a width-adjustment cylinder are described in EP 0 067 286, EP 0 434 531, EP 0 438 936, EP 0 758 718, FR 2 720 123, FR 2 765 924 and DE 43 11 275.

If the driver of the tractor wants to reverse the plough, in the known devices it is sufficient to operate a single button, after which the movement cycle of the reversing cylinder and, if appropriate, the width-adjustment cylinder proceeds automatically. When the plough is being reversed, the piston rod of the reversing cylinder usually first slides inwards and then back outwards, so that a reversal of the direction of movement of the piston rod therefore takes place. This reversal is brought about automatically by means of a dedicated valve assembly which forms part of the hydraulic operating device.

The known hydraulic operating devices, and in particular that part of these devices which automatically reverses the direction of movement of the reversing cylinder(s) have a number of drawbacks. These drawbacks are to be found especially in plough systems with two reversing cylinders. A first drawback is that the structure of the known valve assemblies is undesirably complex, leading to a high cost price, expensive maintenance and also an undesirably high risk of faults.

A further problem of the known devices is that it is sometimes necessary to stop the movement of the plough while the plough is being reversed, for example because it is not yet desired to place the plough onto the ground on the other side. If the reversing movement is to be continued subsequently, in some known valve assemblies it is possible that the plough will not turn further in the appropriate direction, but rather will unintentionally begin to move to the other side. This undesirable situation has been found to be dependent, inter alia, on the design, in particular the weight, of the plough and the position in which the plough reversing is stopped. This is because these elements determine the load on the reversing cylinder and therefore the hydraulic working pressure in the hydraulic system. In some known hydraulic operating devices, a certain working pressure may lead to the reversing valve unintentionally adopting a different position, and therefore to the reversing direction of the plough being unintentionally changed.

The object of the present invention is to eliminate the abovementioned drawbacks.

This object is achieved according to the present invention by a valve assembly according to claim 1.

Further advantageous embodiments of the valve assembly according to the invention, and also of a hydraulic operating device for a reversible plough provided with a valve assembly of this type, are described in the claims and in the following description with reference to the drawing, in which:
Fig. 1 diagrammatically depicts a section of a hydraulic reversible-plough operating device according to the invention, which section is responsible for reversing the reversible plough (not shown),
Fig. 2a-d show the two plough-reversing cylinders from Figure 1 in four positions during reversing of the plough, and
Fig. 3-8 show a more detailed view of a preferred embodiment of the valve assembly which is responsible for automatically reversing the direction of movement of a reversing cylinder in Fig. 1 and 2, various switching states of the valve assembly being illustrated.

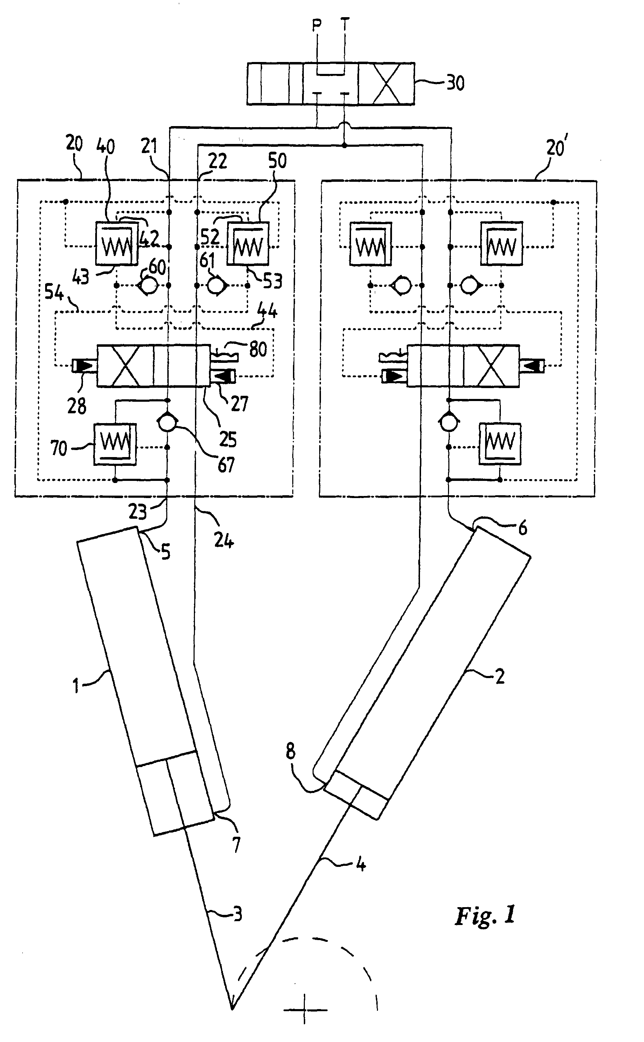

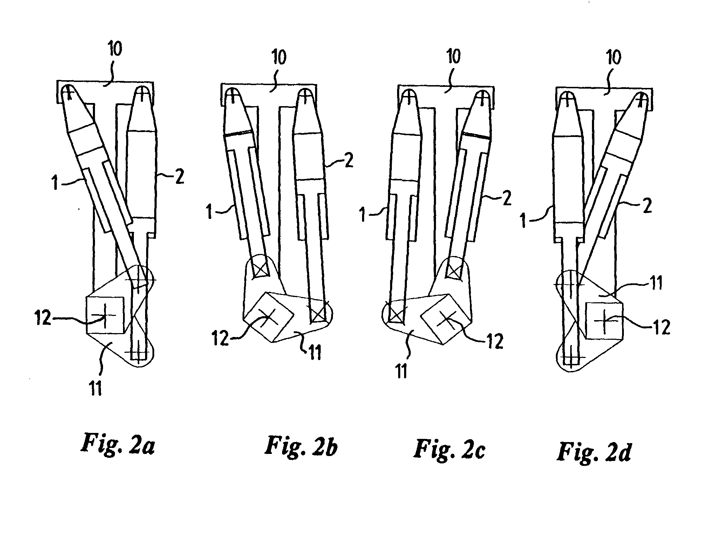

Figures 1 and 2 show two hydraulic plough-reversing cylinders 1, 2. The cylinders 1, 2 are of the double-acting type and each have a piston/piston rod assembly 3, 4 and a base-side connection port 5, 6 and a piston-rod-side connection port 7, 8.

The cylinders 1, 2 are positioned between a frame 10 and a reversing yoke 11, which is mounted so that it can rotate about a reversing shaft 12 with respect to the frame 10. The frame 10 is attached in one way or another to a tractor (not shown), and the reversing yoke 11 forms part of a reversible plough, which is not shown in more detail. It should be noted that the arrangement of the reversing cylinders 1, 2 shown in Figures 2a-d is known per se. Incidentally, an arrangement in which the reversing yoke 11 forms part of the tractor or is attached to the tractor and the frame 10 forms part of the plough is also known. It will be clear that the present invention can also be employed in that situation.

Figure 2a shows a first extreme reversing position, in which, for example, it is possible to plough on the right-hand side of the tractor, and Figure 2d shows a second extreme reversing position, in which it is then possible to plough on the left-hand side of the tractor. Figures 2b and 2c show intermediate positions of the reversing yoke 11.

It can be seen from Figure 1 that each of the reversing cylinders 1, 2 has an associated valve assembly 20, 20' according to the invention, which valve assemblies are of identical design, and consequently only the valve assembly 20 will be explained in detail below.

It can be seen from Figures 2a-d that, when the plough is being reversed, firstly the piston/piston rod assembly 3, 4 of each reversing cylinder 1, 2 is retracted, until it reaches its dead centre position corresponding to the maximum retracted position possibly, and that the corresponding piston/piston rod assembly 3, 4 is then extended again. In the process, the piston/piston rod assemblies 3, 4 reach their dead centre position at different moments (cf. Fig. 2b, 2c).

The valve assembly 20 is designed in such a manner that the direction of movement of the piston/piston rod assembly 3 of the associated reversing cylinder 1 is reversed automatically, for which purpose it is necessary for the hydraulic fluid then no longer to be supplied to the rod-side connection port 7, but rather to the base-side connection port 8.

Figure 1 diagrammatically depicts the arrangement of the valve assembly 20, which arrangement will be discussed below.

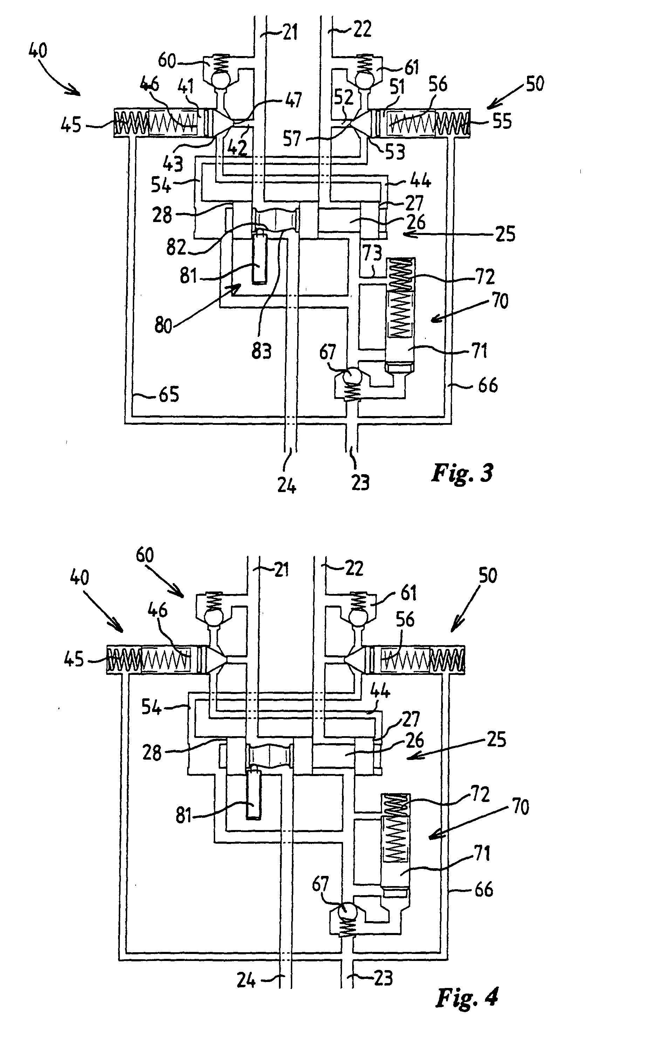

Figures 3-8 show a possible practical realization of this diagrammatically illustrated arrangement, in which all components of the valve assembly are accommodated in a common block.

The valve assembly 20 comprises a first port 21 and a second port 22. In this case it is possible - depending on the switching position of a valve or other valve assembly 30 positioned ahead of the valve assemblies 20, 20' - for one port to be connected to a source for supplying pressurized hydraulic fluid, in particular a pump P, and for the other port to be connected to a substantially unpressurized reservoir for hydraulic fluid T.

The valve assembly 20 furthermore comprises a third port 23 and a fourth port 24, which in this case are respectively connected to the base-side port 5 and the piston-rod-side port 7 of the cylinder 1.

The valve assembly 20 furthermore comprises a reversing valve 25 which is hydraulically operated indirectly. This reversing valve 25 is a two-position slide valve with a sliding body 26 (cf. Figs 3-8). The sliding body 26 can adopt a first and a second position; in the first position, the first port 21 is connected to third port 23 and second port 22 is connected to fourth port 24. In the second position of the sliding body 26, the first port 21 is connected to fourth port 24, and the second port 22 is connected to third port 23.

The sliding body 26 is moved from one position to the other and back again by hydraulic means, and therefore there is no spring return to one of the two positions as in the known valve assemblies mentioned above.

For this movement, the sliding body 26 is provided with a first control surface 27, in such a manner that when a control pressure is exerted on the said control surface 27 the sliding body 26 is pressed into the first position. Furthermore, the sliding body 26 is provided with a second control surface 28, in such a manner that when a control pressure is exerted on the said control surface 28 the sliding body 26 is slid into the second position.

The control pressure on the control-pressure surfaces 27, 28 of the reversing valve 25 is regulated by means of a first pilot valve 40 and a second pilot valve 50.

The pilot valves 40, 50 are of substantially identical design and each have an associated pilot valve body 41, 51. Each pilot valve 40, 50 has an associated supply port 42, 52, which is respectively connected to the first port 21 and the second port 22 of valve assembly 20. Furthermore, each pilot valve 40, 50 has an outlet port 43, 53 which is respectively connected to the first control surface 27 and the second control surface 28 of the sliding body 26 of the reversing valve 25, respectively via a line 44, 54.

In its closed position (cf. Fig. 3), the pilot valve body 41, 51 closes the connection between the associated supply port and outlet port. Each pilot valve body 41, 51 is provided with a closure spring 45, 55 which presses the pilot valve body into its closed position. Furthermore, there is provision for each pilot valve body 41, 51 to have a closing surface 46, 56, in such a manner that when defined hydraulic pressure is exerted on the said closing surface 46, 56 the pilot valve body 41, 51 is pressed into the closed position.

That part of the valve body 41, 51 which, in the closed position of the associated pilot valve 40, 50 is exposed to the hydraulic pressure at the port 21 or the port 22 forms an opening surface 47, 57, in such a manner that, when pressure is exerted on the said opening surface, the pilot valve body is pressed into the open position.

Figures 1 and 3-8 also show a first nonreturn valve 60 and a second nonreturn valve 61, which are respectively between the first control surface 27 of reversing valve 25 and the first port 21 and between the second control surface 28 of reversing valve 25 and the second port 22. The first and second nonreturn valves 60, 61 are in this case in the form of spring-return ball valves and close in the direction of the corresponding control surface 27, 28 of the reversing valve 25. It should be noted that as an alternative to a ball it would also be possible to use, for example, a cone in the nonreturn valves.

The diagrammatic illustration shown in Figure 1 reveals that the closing control surfaces 46, 56 of the two pilot valves 40, 50 are connected to third port 23, for which purpose the lines 65 and 66 are provided in Figures 3-8.

Furthermore, a back-pressure setting means is provided between the third port 23 and the reversing valve 25. The back-pressure setting means allows hydraulic fluid to flow from the third port 23 to the reversing valve 25, generating a defined back pressure at the third port 23, which back pressure, via the lines 65, 66, is also exerted on the closing control surfaces 46, 56 of the pilot valves 40, 50.

In this example, the pressure setting means comprises a third nonreturn valve 67 between reversing valve 25 and the third port 23, which third nonreturn valve 67 closes in the direction of the reversing valve 25. In this example, this nonreturn valve 67 is also in the form of a spring-return ball valve. Furthermore, a back-pressure setting valve 70 is arranged in parallel with the third nonreturn valve 70, between the third port 23 and the reversing valve 25. This valve 70 has a valve body 71 which is loaded, by restoring means, in the direction of the closed position and opens when there is sufficient back pressure at third port 23. In this case, the restoring means are formed by a retaining spring 72. Furthermore, on the side of the retaining spring 72 there is an equalization line 73 leading to the reversing valve 25. The line 73 is used to prevent pressure building up behind the valve body 71 as a result of leaking oil and also provides the possibility of creating a pressure difference corresponding to the stress of the spring 72.

The reversing valve 25 is provided with retaining means 80 which produce a bistable action of the sliding body 26, i.e. these means 80 are designed to retain the sliding body 26 in each of the two switching positions. In this case, the said retaining means 80 are designed in such a manner that it is possible to move the sliding body from one position to the other position when one of the two control surfaces 27, 28 of the reversing valve 25 is activated.

Figures 3-8 show a possible embodiment of the retaining means. In this example, these means 80 comprise a pin 81 which presses against the sliding body 26 under spring loading from a spring which is not shown. The sliding body 26 is provided with two conical faces 82, 83 against which the pin can bear. The faces 82, 83 adjoin one another with their largest diameter in the centre. Obviously, the sliding body 26 will preferably adopt a position in which the pin 81 bears against the smallest diameter of this part of the sliding body 26. The retaining means 80 ensure that the sliding body 26 of the valve 25 holds its last set position when there is no hydraulic control pressure on the two control surfaces 27, 28 and when both control surfaces are exposed to an identical control pressure. It will be clear that the retaining means 80 could also be of different design in order to obtain the "bistable" retaining action described.

The way in which the valve assembly 20 operates will be explained in more detail with reference to Figures 3-8 in combination with Figure 1, the assumption being that the reversing is brought about starting from the first extreme reversing position shown in Figure 2a.

Figure 3 shows the valve assembly 20 in the situation in which there is no reversing in progress and the valve 30 is in the middle position. In the starting situation shown in Figure 3, the reversing valve 25 is in the second switching position, which is different from that shown in the diagrammatic illustration of Figure 1, so that the first port 21 is connected to the fourth port 24 and the second port 22 is connected to the third port 23.

Operation of the valve 30 (cf. Fig. 1) then connects the first port 21 to the pump P and the second port 22 to the reservoir T. Via the reversing valve 25, the hydraulic fluid flows to the fourth port 24 and thus to the rod-side port 7 of the cylinder 1. As a result, the piston/piston rod assembly 3 is retracted. Hydraulic fluid flows out of the cylinder 1 via the port 5 and to the third port 23, opening the valve 70 (cf. Figure 4). The liquid then flows past the opened valve 70 to the reversing valve 25 and, from there, to the second port 22. The valve 70 builds up a back pressure, which back pressure also acts on the closing surfaces 46, 56 of the valves 40, 50 and assists the spring which is present in that area. As a result, these valves 40, 50 remain closed, as shown in Figure 4.

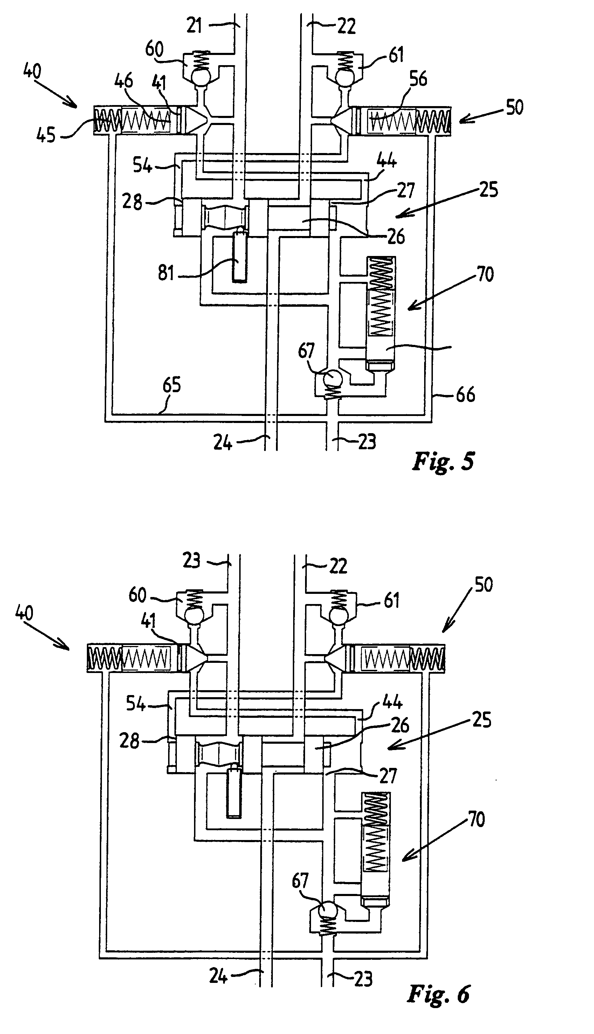

When, during retraction of the piston/piston rod assembly 3, the dead centre position is reached (Fig. 2b), the flow out of the cylinder 1 via the port 5 ceases and therefore the pressure on the closing surfaces 46, 56 is also eliminated. The pressure at the port 21 will also rise, since the piston/piston rod assembly 3 cannot be retracted further. This pressure overcomes the force of the spring 45, so that the valve 40 opens, as shown in Figure 5. Via the line 44, this pressure reaches the control surface 27 of the sliding body 26, so that the sliding body 26 is moved into its first switching position (cf. Figure 5). Hydraulic fluid which has been supplied via the first port 21 then flows via the reversing valve 25 to the third port 23 and thus to the base-side connection port 5 of the cylinder 1. The rod-side connection port 7 is then connected, via the fourth port 24, to the second port 22 and thus to the reservoir T. As a result, the piston/piston rod assembly 3 of the cylinder 1 extends, during which process the direction of movement of the cylinder 1 is reversed completely automatically. The extension continues until it is complete (cf. Fig. 2d) and the second extreme reversing position has been reached.

It will be clear that in fact the same cycle applies to the other reversing cylinder 2, except that the direction of movement is reversed at a later time.

If a reversing operation which starts from the second extreme position (Fig. 2d) is then desired, the cycle associated with the cylinder 1 is as follows.

In the first instance, the valve assembly 20 is in the position shown in Figure 6, with the valve 30 (cf. Fig. 1) then being in its middle position.

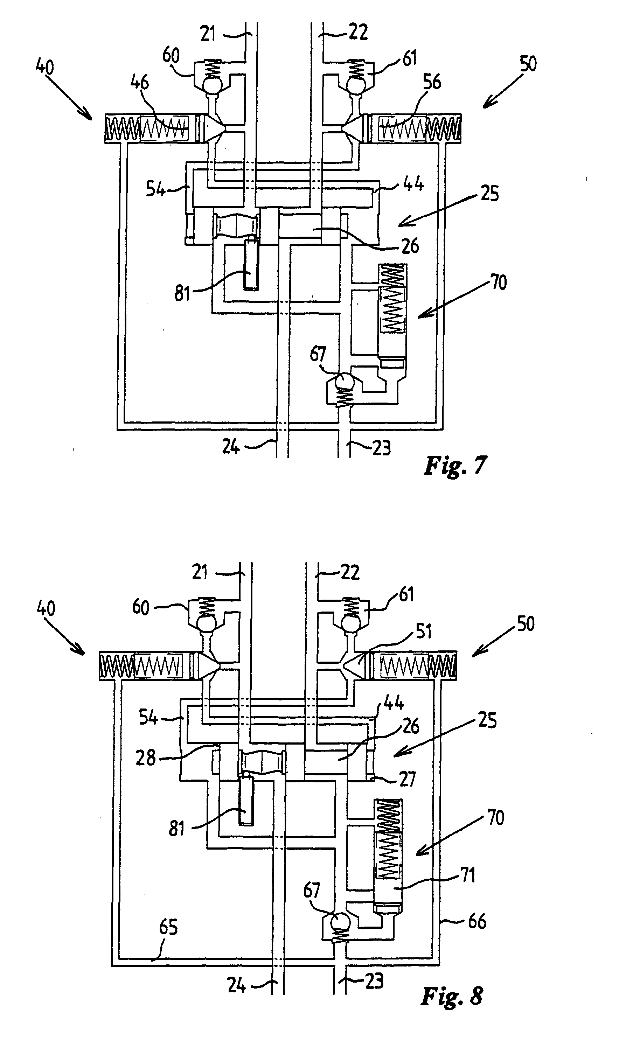

Operation of the valve 30 can ensure that the pump P is connected to the second port 22 and that the first port 21 is connected to the reservoir T. Then, hydraulic fluid flows via the reversing valve 25 to the fourth port 24 and, from there, to the rod-side connection ports 7 of the cylinder 1. As a result, the piston/piston rod assembly 3 retracts. The return liquid from the cylinder 1 opens the valve 70 (cf. Fig. 7) and flows to the first port 21 via the valve 70 and the reversing valve 25. The valve 70 produces the back pressure which acts on the closing surfaces 46, 56 of the valves 40, 50, so that these valves 40, 50 remain closed (cf. Fig. 7).

When the piston/piston rod assembly 3 of the cylinder 1 reaches its fully retracted position, the return flow ceases - and therefore the back pressure at the valve 70 is eliminated - and the pressure at the second port 22 will increase. As a result, the pilot valve 50 opens (cf. Fig. 8) and hydraulic pressure passes via the line 54 onto the control surface 28 of the sliding body 26. As a result, the sliding body 26 is moved from the first position to the second position (cf. Fig..8). As a result, the piston/piston rod assembly 3 of the cylinder 1 will then be extended again.

In this case too, it will be clear that the cycle for the cylinder 2 is similar, with an earlier moment of reversal.

If, during the reversing cycle, the valve 30 is actuated and is placed in the middle position, in order to interrupt the reversing operation, this cycle can be continued as a result of the said valve 30 again being actuated in the same direction or, if the valve 30 is moved into the other position, can be continued in the other direction.

With the valve assembly according to the invention, operation of the reversing valve 25 is very stable, in particular because of the presence of the retaining means 80, i.e. the movement of the sliding body 26 is to a large extent independent of the working pressure in the hydraulic system.

It will be clear that the valve assembly 20 can also be used for a plough reversing device with a single reversing cylinder, a situation which also occurs in practice. Furthermore, it will be clear that the valve assembly according to the invention can be used not only for reversing ploughs, but also for any arrangement in which automatic reversal of an actuator operated by a pressure medium is desired. It should be noted that it is also possible to use compressed air or the like as the pressure medium instead of hydraulic fluid.

The valve assembly 20 may be designed as a completely closed unit, preferably in the form of a valve block, so that its operation cannot be sabotaged from the outside. Furthermore, the valve assembly 20 may be arranged at any desired location, for example may be combined with a valve assembly which interacts with the width-adjustment cylinder of a reversible plough.

## Claims

1. Valve assembly (20, 20') for automatically reversing an actuator (1, 2), in particular a double-acting cylinder, which is operated by a pressure medium, comprising:
- a first and second port (21, 22), which can each be selectively connected to a supply for a pressure medium (P) and to a reservoir (T),
- a third and fourth port (23, 24), which can be connected to the actuator (1, 2),
- a reversing valve (25) which is indirectly operated by pressure medium, comprising:
- a sliding body (26), which can adopt a first and a second position, in which first position the first port (21) is connected to the third port (23) and the second port (22) is connected to the fourth port (24), and in which second position the first port (21) is connected to the fourth port (24) and the second port (22) is connected to the third port (23),
- the sliding body (26) being provided with a first control surface (27), in such a manner that, when a control pressure is exerted on the said first control surface (27), the sliding body (26) is pressed into the first position,
- and the sliding body (26) being provided with a second control surface (28), in such a manner that when a control pressure is exerted on the said second control surface (28) the sliding body is pressed into the second position,
- a first and a second pilot valve (40, 50) having an associated pilot valve body (41, 51), the first and second pilot valves each having a supply port (42, 52), which is respectively connected to the first and second ports (21, 22) of valve assembly (20), and the first and second pilot valves (40, 50) each having an outlet port (43, 53), which is connected to the reversing valve (25), in such a manner that, when the first or second pilot valve is opened, a pressure is exerted on the first or second control surface (27, 28), respectively, of sliding body (26) of the reversing valve (25),
- a back-pressure setting means (67, 70) between the third port (23) and the reversing valve (25), which back-pressure setting means (67, 70) allows pressure medium to flow from the third port (23) to the reversing valve (25), with a back pressure being generated at the third port (23),
each of the pilot valves (40, 50) being designed in such a manner that its pilot valve body (41, 51) is pressed into the closed position under the influence of the back pressure from the pressure medium which prevails at the third port (23) and is generated by the back-pressure setting means (67, 70), and in such a manner that the pilot valve which on the supply side is connected to the first or second port connected to the supply (P) for a pressure medium opens if a flow of pressure medium from the third port via the back-pressure setting means into the first or second port connected to the reservoir (T) is absent - so that no back pressure is generated - in which case, as a result of the pilot valve (40, 50) under consideration being opened, a pressure is exerted on a control surface (27, 28) of the sliding body (26) of the reversing valve (25) and, as a result, the sliding body (26) slides to the other position.

2. Valve assembly according to claim 1, in which the reversing valve (25) is also provided with retaining means (80, 81, 82, 83), which are designed to be able to retain the sliding body (26) in each of its two positions, which retaining means are designed to allow adjustment of the sliding body (26) when a control surface (27, 28) of the reversing valve (25) is activated.

3. Valve assembly according to claim 1 or 2, in which the back-pressure setting means comprises a nonreturn valve (67) between the reversing valve (25) and the third port (23), which nonreturn valve (67) closes in the direction of the reversing valve (25), and also a back-pressure setting valve (70) having a valve body (71) which is loaded in the direction of the closed position by restoring means (72) and opens under a desired back pressure at third port (23).

4. Valve assembly according to one or more of the preceding claims, in which a nonreturn valve (60, 61) is provided in each case between the first control surface (27) of the reversing valve (25) and the first port (21) and between the second control surface (28) of reversing valve (25) and the second port (22), which nonreturn valves (60, 61) close in the direction of the corresponding control surface (27, 28) of the reversing valve.

5. Valve assembly according to one or more of the preceding claims, in which each pilot valve body (41, 51) has a closing surface (46, 56), in such a manner that, when pressure is exerted on the said closing surface (46, 56), the pilot valve body (40, 50) is pressed into the closed position.

6. Valve assembly according to one or more of the preceding claims, in which each pilot valve body (41, 51) has an opening surface (47, 57), in such a manner that, when pressure is exerted on the said opening surface, the pilot valve body is pressed into the open position.

7. Valve assembly for automatically reversing an actuator (1), in particular a double-acting cylinder, which is operated by a pressure medium, comprising:
- a first and second port (21, 22), it being possible to connect one port to a supply for a pressure medium (P) and the other to a reservoir (T),
- a third and fourth port (23, 24), which can be connected to the actuator,
- a reversing valve (25) which is indirectly operated by pressure medium, comprising:
- a sliding body (26), which can adopt a first and a second position, in which first position the first port (21) is connected to the third port (23) and the second port (22) is connected to the fourth port (24), and in which second position the first port (21) is connected to the fourth port (24) and the second port (22) is connected to the third port (23),
- the sliding body (26) being provided with a first control surface (27), in such a manner that, when a control pressure is exerted on the said control surface (27), the sliding body (26) is pressed into the first position,
- and the sliding body (26) being provided with a second control surface (28), in such a manner that when a control pressure is exerted on the said control surface (28) the sliding body is pressed into the second position,
- a first and a second pilot valve (40, 50) having an associated pilot valve body (41, 51), each pilot valve having a supply port (42, 52), which is respectively connected to the first and second ports (21, 22) of valve assembly (20),
and each pilot valve (40, 50) having an outlet port (43, 53), which is respectively connected to the first and second control surfaces (27, 28) of sliding body (26) of the reversing valve (25),
each pilot valve body (41, 51) furthermore having a closing surface (46, 56), in such a manner that when pressure is exerted on the said closing surface (46, 56) the pilot valve body (40, 50) is pressed into the closed position,
each pilot valve body (41, 51) furthermore having an opening surface (47, 57), in such a manner that, when pressure is exerted on the said opening surface, the pilot valve body is pressed into the open position,
- a first and a second nonreturn valve (60, 61), which are respectively between the first control surface (27) of the reversing valve (25) and the first port (21) and between the second control surface (28) of reversing valve (25) and the second port (22), which first and second nonreturn valves (60, 61) close in the direction of the corresponding control surface (27, 28) of the reversing valve,
- the closing surfaces (46, 56) of the two pilot valves being connected to third port (23),
- a third nonreturn valve (67) between the reversing valve (25) and the third port (23), which third nonreturn valve (67) closes in the direction of the reversing valve (25),
- a back-pressure setting valve (70) which is connected in parallel with the third nonreturn valve (67) between the third port (23) and the reversing valve (25), which back-pressure setting valve (70) allows a flow of pressure medium from the third port (23) into the reversing valve (25), with a back pressure being generated at the third port (23), which back pressure is also exerted on the closing surfaces (46, 56) of the pilot valves (40, 50).

8. Operating device comprising a valve assembly according to one or more of the preceding claims, in which a double-acting actuator (1) is also provided, having a base-side connection port (5) and a rod-side connection port (7), and the third port (23) of the valve assembly (20) being connected to the base-side connection port (5), and the fourth port (24) of the valve assembly (20) being connected to the rod-side connection port (7) .

9. Reversing device comprising a frame and a body which can turn about an associated reversing shaft with respect to the frame, a double-acting actuator also being provided, which is arranged between the frame and the turnable body in order to turn the body, in such a manner that, in the process, during the reversing operation the direction of movement of the actuator has to be reversed, a valve assembly according to one or more of claims 1-7 being provided at the actuator in order to automatically reverse the direction of movement.

10. Reversing device comprising a frame (10) and a body (11) which can turn about an associated reversing shaft (12) with respect to the frame, a first and a second double-acting actuator (1, 2) also being provided, which are arranged between the frame and the turnable body in order to turn the body, the actuators (1, 2) each having a different orientation, in such a manner, that in the process, during the reversing operation, the direction of movement of the actuators has to be reversed, and a valve assembly (20, 20') according to one or more of claims 1-7 being provided at each of the actuators, in order to automatically reverse the direction of movement.

11. Reversing device according to claim 10, in which the turnable body is a plough.

12. Reversible plough device, comprising a plough which can rotate about a reversing shaft, a hydraulic reversing device provided with a valve assembly according to one or more of claims 1-7 being provided for the purpose of reversing the plough.

## Patentansprüche

1. Ventilaufbau (20, 20') zum automatischen Umschalten eines Aktuators (1, 2), insbesondere eines doppeltwirkenden Zylinders, welcher mittels eines Druckmediums betrieben wird, mit:
- einer ersten und zweiten Öffnung (21, 22), welche jeweils selektiv mit einer Zuführung für ein Druckmedium (P) und mit einem Reservoir (T) verbunden werden können,
- einer dritten und vierten Öffnung (23, 24), welche mit dem Aktuator (1, 2) verbunden werden können,
- einem Umschaltventil (25), welches indirekt mittels des Druckmediums betrieben wird, mit:
- einem Gleitkörper (26), welcher eine erste und eine zweite Stellung einnehmen kann, wobei in der ersten Stellung die erste Öffnung (21) mit der dritten Öffnung (23) und die zweite Öffnung (22) mit der vierten Öffnung (24) verbunden ist, und in der zweiten Stellung die erste Öffnung (21) mit der vierten Öffnung (24) und die zweite Öffnung (22) mit der dritten Öffnung (23) verbunden ist,
- wobei der Gleitkörper (26) mit einer ersten Steueroberfläche (27) derart versehen ist, daß, wenn ein Steuerdruck auf die erste Steueroberfläche (27) aufgebracht wird, der Gleitkörper (26) in die erste Stellung gedrückt wird,
- und wobei der Gleitkörper (26) mit einer zweiten Steueroberfläche (28) derart versehen ist, daß, wenn ein Steuerdruck auf die zweite Steueroberfläche (28) aufgebracht wird, der Gleitkörper in die zweite Stellung gedrückt wird,
- einem ersten und zweiten Vorsteuerventil (40, 50) mit einem zugehörigen Vorsteuerventilkörper (41, 51), wobei die ersten und die zweiten Vorsteuerventile jeweils eine Zuführungsöffnung (42, 52) aufweisen, welche jeweils mit den ersten und den zweiten Öffnungen (21, 22) des Ventilaufbaus (20) verbunden sind, und die ersten und die zweiten Vorschaltventile (40, 50) jeweils eine Auslaßöffnung (43, 53) haben, welche mit dem Umschaltventil (25) derart verbunden ist, daß, wenn das erste oder das zweite Vorschaltventil geöffnet ist, ein Druck entsprechend auf die erste oder die zweite Steueroberfläche (27, 28) des Gleitkörpers (26) des Umschaltventils (25) aufgebracht wird,
- einem Gegendruckeinstellmittel (67, 70) zwischen der dritten Öffnung (23) und dem Umschaltventil (25), wobei das Gegendruckeinstellmittel (67, 70) es dem Druckmedium ermöglicht, von der dritten Öffnung (23) zum Umschaltventil (25) zu fließen und einen Gegendruck an der dritten Öffnung (23) zu erzeugen,
wobei jedes der Vorschaltventile (40, 50) derart konstruiert ist, daß sein Vorschaltventilkörper (41, 51) durch den Einfluß des Gegendruckes von dem Druckmedium, welches an der dritten Öffnung (23) herrscht und durch das Gegendruckeinstellmittel (67, 70) erzeugt wird, in die geschlossene Stellung gedrückt wird, und derart, daß das Vorsteuerventil, welches auf der Zuführungsseite mit der ersten oder der zweiten Öffnung verbunden ist, welche mit der Zuführung (P) für ein Druckmedium verbunden sind, öffnet, wenn ein Strom des Druckmediums von der dritten Öffnung durch die Gegendruckeinstellmittel in die erste oder zweite Öffnung, die mit dem Reservoir (T) verbunden sind, nicht fließt - so daß kein Gegendruck erzeugt wird -, in welchem Fall als Ergebnis, daß das betreffende Vorschaltventil (40, 50) geöffnet wird, ein Druck auf eine Steueroberfläche (27, 28) des Gleitkörpers (26) des Umschaltventils (25) aufgebracht wird, und als ein Ergebnis der Gleitkörper (26) in die andere Stellung gleitet.

2. Ventilaufbau nach Anspruch 1, in welchem das Umschaltventil (25) auch mit Sperrmitteln (80, 81, 82, 83) versehen ist, welche so konstruiert sind, daß sie in der Lage sind, den Gleitkörper (26) in jeder seiner zwei Stellungen zu halten, wobei die Sperrmittel ausgelegt sind, eine Einstellung des Gleitkörpers (26) zu ermöglichen, wenn eine Steueroberfläche (27, 28) des Umschaltventils (25) aktiviert ist.

3. Ventilaufbau nach Anspruch 1 oder 2, in welchem das Gegendruckeinstellmittel ein Rückschlagventil (67) zwischen dem Umschaltventil (25) und der dritten Öffnung (23) umfaßt, wobei das Rückschlagventil (67) in die Richtung des Umschaltventils (25) schließt, und auch ein Gegendruckeinstellventil (70) vorgesehen ist, welches einen Ventilkörper (71) aufweist, der in die Richtung der geschlossenen Stellung mittels Rückstellmitteln (72) belastet ist und unter einem gewünschten Gegendruck an der dritten Öffnung (23) öffnet.

4. Ventilaufbau nach einem oder mehreren der vorhergehenden Ansprüche, in welchem ein Rückschlagventil (60, 61) in jedem Fall zwischen der ersten Steueroberfläche (27) des Umschaltventils (25) und der ersten Öffnung (21) und zwischen der zweiten Steueroberfläche (28) des Umschaltventils (25) und der zweiten Öffnung (22) vorgesehen ist, wobei die Rückschlagventile (60, 61) in die Richtung der entsprechenden Steueroberfläche (27, 28) des Umschaltventiles schließen.

5. Ventilaufbau nach einem oder mehreren der vorhergehenden Ansprüche, in welchem jeder Vorschaltventilkörper (41, 51) eine Schließfläche (46, 56) aufweist, derart, daß, wenn Druck auf die Schließfläche (46, 56) aufgebracht wird, der Vorschaltventilkörper (40, 50) in die geschlossene Stellung gedrückt wird.

6. Ventilaufbau nach einem oder mehreren der vorhergehenden Ansprüche, in welchem jeder Vorschaltventilkörper (41, 51) eine Öffnungsfläche (47, 57) aufweist, derart, daß, wenn Druck auf die Öffnungsfläche aufgebracht wird, der Vorschaltventilkörper in die geöffnete Stellung gedrückt wird.

7. Ventilaufbau zum automatischen Umschalten eines Aktuators (1), insbesondere eines doppeltwirkenden Zylinders, welcher mittels eines Druckmediums betrieben wird, mit:
- einer ersten und einer zweiten Öffnung (21, 22), wobei es möglich ist, eine Öffnung mit einer Zuführung für ein Druckmedium (P) und die andere mit einem Reservoir (T) zu verbinden,
- einer dritten und vierten Öffnung (23, 24), welche mit dem Aktuator verbunden werden können,
- einem Umschaltventil (25), welches indirekt mittels des Druckmediums betrieben wird, mit:
- einem Gleitkörper (26), welcher eine erste und eine zweite Stellung einnehmen kann, wobei in der ersten Stellung die erste Öffnung (21) mit der dritten Öffnung (23) und die zweite Öffnung (22) mit der vierten Öffnung (24) verbunden ist, und wobei in der zweiten Stellung die erste Öffnung (21) mit der vierten Öffnung (24) und die zweite Öffnung (22) mit der dritten Öffnung (23) verbunden ist,
- wobei der Gleitkörper (26) mit einer ersten Steueroberfläche (27) derart versehen ist, daß, wenn ein Steuerdruck auf die Steueroberfläche (27) aufgebracht wird, der Gleitkörper (26) in die erste Stellung gedrückt wird,
- und wobei der Gleitkörper (26) mit einer zweiten Steueroberfläche (28) derart versehen ist, daß, wenn ein Steuerdruck auf die Steueroberfläche (28) aufgebracht wird, der Gleitkörper in die zweite Stellung gedrückt wird,
- einem ersten und einem zweiten Vorschaltventil (40, 50) mit einem zugehörigen Vorschaltventilkörper (41, 51), wobei jedes Vorschaltventil eine Zuführungsöffnung (42, 52) hat, welche jeweils mit der ersten und der zweiten Öffnung (21, 22) des Ventilaufbaus (20) verbunden ist,
und jedes Vorschaltventil (40, 50) mit einer Auslaßöffnung (43, 53), welche jeweils mit den ersten und zweiten Steueroberflächen (27, 28) des Gleitkörpers (26) des Umschaltventils (25) verbunden ist, versehen ist,
jeder Vorschaltventilkörper (41, 51) weiterhin mit einer Schließfläche (46, 56) derart versehen ist, daß, wenn Druck auf die Schließfläche (46, 56) aufgebracht wird, der Vorschaltventilkörper (40, 50) in die geschlossene Position gedrückt wird,
jeder Vorschaltventilkörper (41, 51) weiter eine Öffnungsfläche (47, 57) derart aufweist, daß, wenn Druck auf die Öffnungsfläche aufgebracht wird, der Vorschaltventilkörper in die geöffnete Position gedrückt wird,
- einem ersten und einem zweiten Rückschlagventil (60, 61), welche jeweils zwischen der ersten Steueroberfläche (27) des Umschaltventils (25) und der ersten Öffnung (21) und zwischen der zweiten Steueroberfläche (28) des Umschaltventils (25) und der zweiten Öffnung (22) vorgesehen sind, wobei die ersten und zweiten Rückschlagventile (60, 61) in die Richtung der entsprechenden Steueroberfläche (27, 28) des Umschaltventils schließen,
- die Schließflächen (46, 56) der beiden Vorschaltventile mit der dritten Öffnung (23) verbunden sind,
- einem dritten Rückschlagventil (67) zwischen dem Umschaltventil (25) und der dritten Öffnung (23),
wobei das dritte Rückschlagventil (67) in die Richtung des Umschaltventils (25) schließt,
- einem Gegendruckeinstellventil (70), welches in Parallelität mit dem dritten Rückschlagventil (67) zwischen der dritten Öffnung (23) und dem Umschaltventil (25) angeschlossen ist, wobei das Gegendruckeinstellventil (70) es dem Druckmedium ermöglicht, von der dritten Öffnung (23) in das Umschaltventil (25) zu fließen, wobei ein Gegendruck an der dritten Öffnung (23) erzeugt wird und der Gegendruck auch auf die Schließflächen (46, 56) der Vorschaltventile (40, 50) aufgebracht wird.

8. Betätigungseinrichtung mit einem Ventilaufbau nach einem oder mehreren der vorhergehenden Ansprüche, in welchem ein doppeltwirkender Aktuator (1) mit einer trägerseitigen Verbindungsöffnung (5) und einer stangenseitigen Verbindungsöffnung (7) ebenfalls vorgesehen ist und die dritte Öffnung (23) des Ventilaufbaus (20) mit der trägerseitigen Verbindungsöffnung (5) und die vierte Öffnung (24) des Ventilaufbaus (20) mit der stangenseitigen Verbindungsöffnung (7) verbunden ist.

9. Umschaltvorrichtung mit einem Rahmen und einem Körper, welcher sich um eine zugehörige Steuerwelle (12) gegenüber dem Rahmen drehen kann, wobei ein doppeltwirkender Aktuator ebenfalls vorgesehen ist, welcher zwischen dem Rahmen und dem drehbaren Körper angeordnet ist, um den Körper derart zu drehen, daß bei diesem Vorgang während des Umschaltbetriebes die Bewegungsrichtung des Aktuators umgekehrt werden muß, und ein Ventilaufbau nach einem oder mehreren der Ansprüche 1 bis 7 an dem Aktuator vorgesehen ist, um die Bewegungsrichtung automatisch umzukehren.

10. Umschaltvorrichtung mit einem Rahmen (10) und einem Körper (11), welcher sich um eine zugehörige Steuerwelle (12) gegenüber dem Rahmen bewegen kann, wobei ein erster und ein zweiter doppeltwirkender Aktuator (1, 2) auch vorgesehen sind, welche zwischen dem Rahmen und dem drehbaren Körper angeordnet sind, um den Körper zu drehen, und die Aktuatoren (1, 2) jeweils eine verschiedene Orientierung haben, derart, daß im Betrieb während des Umschaltbetriebes die Bewegungsrichtung des Aktuators umgekehrt werden muß, und ein Ventilaufbau (20, 20') nach einem oder mehreren der Ansprüche 1 bis 7 an jedem der Aktuatoren vorgesehen ist, um die Bewegungsrichtung automatisch umzukehren.

11. Umschaltvorrichtung nach Anspruch 10, in welchem der drehbare Körper ein Pflug ist.

12. Umschaltbare Pflugvorrichtung, welche einen Pflug umfaßt, der sich um eine Steuerwelle drehen kann, und eine hydraulische Umschaltvorrichtung, welche mit einem Ventilaufbau nach einem oder mehreren der Ansprüche 1 bis 7 versehen ist, um den Pflug umzukehren.

## Revendications

1. Ensemble soupape (20, 20') destiné à inverser automatiquement un actionneur (1, 2), en particulier un vérin à double effet, qui est commandé par un milieu à pression, comprenant :
- un premier et un second orifices (21, 22), qui peuvent être chacun sélectivement reliés à une alimentation en milieu à pression (P) et à un réservoir (T),
- un troisième et un quatrième orifices (23, 24), qui peuvent être reliés à l'actionneur (1, 2),
- une soupape d'inversion (25) qui est indirectement commandée par le milieu à pression, comprenant :
- un corps coulissant (26), qui peut adopter une première et une seconde positions, une première position à laquelle le premier orifice (21) est relié au troisième orifice (23) et le second orifice (22) est relié au quatrième orifice (24), et une seconde position à laquelle le premier orifice (21) est relié au quatrième orifice (24) et le second orifice (22) est relié au troisième orifice (23),
- le corps coulissant (26) étant muni d'une première surface de commande (27), de manière à ce que, lorsqu'une pression de commande est exercée sur ladite première surface de commande (27), le corps coulissant (26) soit pressé dans la première position,
- et le corps coulissant (26) étant muni d'une seconde surface de commande (28), de manière à ce que, lorsqu'une pression de commande est exercée sur ladite seconde surface de commande (28), le corps coulissant soit pressé dans la seconde position,
- une première et une seconde soupapes pilotes (40, 50) comprenant un corps de soupape pilote associé (41, 51), les première et seconde soupapes pilotes comprenant chacune un orifice d'alimentation (42, 52), qui est respectivement relié aux premier et second orifices (21, 22) de l'ensemble soupape (20) et les première et seconde soupapes pilotes (40, 50) comprenant chacune un orifice de sortie (43, 53) qui est relié à la soupape d'inversion (25), de manière à ce que, lorsque la première ou la seconde soupape pilote est ouverte, une pression soit exercée sur la première ou la seconde surface de commande (27, 28), respectivement, du corps coulissant (26) de la soupape d'inversion (25),
- un moyen d'établissement de contre-pression (67, 70) entre le troisième orifice (23) et la soupape d'inversion (25), lequel moyen d'établissement de contre-pression (67, 70) permet au milieu à pression de s'écouler du troisième orifice (23) à la soupape d'inversion (25), une contre-pression étant générée au niveau du troisième orifice (23),
chacune des soupapes pilotes (40, 50) étant conçue de manière à ce que son corps de soupape pilote (41, 51) soit pressé dans la position fermée sous l'influence de la contre-pression provenant du milieu à pression qui prédomine au niveau du troisième orifice (23) et qui est générée par le moyen d'établissement de contre-pression (67, 70) et de manière à ce que la soupape pilote qui, du côté alimentation, est reliée au premier ou au second orifice relié à l'alimentation (P) en milieu à pression s'ouvre si un écoulement du milieu à pression depuis le troisième orifice par l'intermédiaire du moyen d'établissement de contre-pression jusque dans le premier ou le second orifice relié au réservoir (T) est absent, de sorte qu'aucune contre-pression n'est générée, auquel cas, du fait que la soupape pilote (40, 50) considérée est ouverte, une pression est exercée sur une surface de commande (27, 28) du corps coulissant (26) de la soupape d'inversion (25) et il en résulte que le corps coulissant (26) coulisse vers l'autre position.

2. Ensemble soupape selon la revendication 1, dans lequel la soupape d'inversion (25) est également munie de moyens de retenue (80, 81, 82, 83), qui sont conçus pour pouvoir retenir le corps coulissant (26) dans chacune de ses deux positions, lesquels moyens de retenue sont conçus pour permettre un ajustement du corps coulissant (26) lorsqu'une surface de commande (27, 28) de la soupape d'inversion (25) est activée.

3. Ensemble soupape selon la revendication 1 ou 2, dans lequel le moyen d'établissement de contre-pression comprend une soupape de retenue (67) entre la soupape d'inversion (25) et le troisième orifice (23), laquelle soupape de retenue (67) se ferme dans la direction de la soupape d'inversion (25), et également une soupape d'établissement de contre-pression (70) comprenant un corps de soupape (71) qui est chargé dans la direction de la position fermée par un moyen de rappel (72) et s'ouvre sous une contre-pression souhaitée au niveau du troisième orifice (23).

4. Ensemble soupape selon une ou plusieurs des revendications précédentes, dans lequel une soupape de retenue (60, 61) est prévu dans chaque cas entre la première surface de commande (27) de la soupape d'inversion (25) et le premier orifice (21) et entre la seconde surface de commande (28) de la soupape d'inversion (25) et le second orifice (22), lesquelles soupapes de retenue (60, 61) se ferment dans la direction de la surface de commande correspondante (27, 28) de la soupape d'inversion.

5. Ensemble soupape selon une ou plusieurs des revendications précédentes, dans lequel chaque corps de soupape pilote (41, 51) présente une surface de fermeture (46, 56), de manière à ce que, lorsqu'une pression est exercée sur ladite surface de fermeture (46, 56), le corps de soupape pilote (40, 50) soit pressé dans la position fermée.

6. Ensemble soupape selon une ou plusieurs des revendications précédentes, dans lequel chaque corps de soupape pilote (41, 51) présente une surface d'ouverture (47, 57), de manière à ce que, lorsqu'une pression est exercée sur ladite surface d'ouverture, le corps de soupape pilote soit pressé dans la position ouverte.

7. Ensemble soupape destiné à inverser automatiquement un actionneur (1), en particulier un vérin à double effet, qui est commandé par un milieu à pression, comprenant :
- un premier et un second orifices (21, 22), une possibilité existant de relier un premier orifice à une alimentation en milieu à pression (P) et l'autre à un réservoir (T),
- un troisième et un quatrième orifices (23, 24), qui peuvent être reliés à l'actionneur,
- une soupape d'inversion (25) qui est indirectement commandée par le milieu à pression, comprenant :
- un corps coulissant (26), qui peut adopter une première et une seconde positions, une première position à laquelle le premier orifice (21) est relié au troisième orifice (23) et le second orifice (22) est relié au quatrième orifice (24), et une seconde position à laquelle le premier orifice (21) est relié au quatrième orifice (24) et le second orifice (22) est relié au troisième orifice (23),
- le corps coulissant (26) étant muni d'une première surface de commande (27), de manière à ce que, lorsqu'une pression de commande est exercée sur ladite surface de commande (27), le corps coulissant (26) soit pressé dans la première position,
- et le corps coulissant (26) étant muni d'une seconde surface de commande (28), de manière à ce que, lorsqu'une pression de commande est exercée sur ladite surface de commande (28), le corps coulissant soit pressé dans la seconde position,
- une première et une seconde soupapes pilotes (40, 50) comprenant un corps de soupape pilote associé (41, 51), chaque soupape pilote comprenant un orifice d'alimentation (42, 52), qui est respectivement relié aux premier et second orifices (21, 22) de l'ensemble soupape (20),
et chaque soupape pilote (40, 50) comprenant un orifice de sortie (43, 53), qui est respectivement relié aux première et seconde surfaces de commande (27, 28) du corps coulissant (26) de la soupape d'inversion (25),
chaque corps de soupape pilote (41, 51) présentant en outre une surface de fermeture (46, 56), de manière à ce que, lorsqu'une pression est exercée sur ladite surface de fermeture (46, 56), le corps de soupape pilote (40, 50) soit pressé dans la position fermée,
chaque corps de soupape pilote (41, 51) présentant en outre une surface d'ouverture (47, 57), de manière à ce que, lorsqu'une pression est exercée sur ladite surface d'ouverture, le corps de soupape pilote soit pressé dans la position ouverte,
- une première et une seconde soupapes de retenue (60, 61), qui se trouvent respectivement entre la première surface de commande (27) de la soupape d'inversion (25) et le premier orifice (21), et entre la seconde surface de commande (28) de la soupape d'inversion (25) et le second orifice (22), lesquelles première et seconde soupapes de retenue (60, 61) se ferment dans la direction de la surface de commande correspondante (27, 28) de la soupape d'inversion,
- les surfaces de fermeture (46, 56) des deux soupapes pilotes étant reliées au troisième orifice (23),
- une troisième soupape de retenue (67) entre la soupape d'inversion (25) et le troisième orifice (23), laquelle troisième soupape de retenue (67) se ferme dans la direction de la soupape d'inversion (25),
- une soupape d'établissement de contre-pression (70) qui est reliée en parallèle à la troisième soupape de retenue (67) entre le troisième orifice (23) et la soupape d'inversion (25), laquelle soupape d'établissement de contre-pression (70) permet un écoulement du milieu à pression depuis le troisième orifice (23) jusque dans la soupape d'inversion (25), une contre-pression étant générée au niveau du troisième orifice (23), laquelle contre-pression est également exercée sur les surfaces de fermeture (46, 56) des soupapes pilotes (40, 50).

8. Dispositif de commande comprenant un ensemble soupape selon une ou plusieurs des revendications précédentes, dans lequel un actionneur à double effet (1) est également prévu, comprenant un orifice de raccordement du côté de la base (5) et un orifice de raccordement du côté de la tige (7), et le troisième orifice (23) de l'ensemble soupape (20) étant relié à l'orifice de raccordement du côté de la base (5) et le quatrième orifice (24) de l'ensemble soupape (20) étant relié à l'orifice de raccordement du côté de la tige (7).

9. Dispositif d'inversion comprenant un bâti et un corps qui peut tourner autour d'un arbre d'inversion associé par rapport au bâti, un actionneur à double effet étant également prévu, lequel est disposé entre le bâti et le corps pouvant tourner de manière à faire tourner le corps, de manière à ce que, au cours du processus, pendant l'opération d'inversion, le sens de déplacement de l'actionneur doive être inversé, un ensemble soupape selon une ou plusieurs des revendications 1 à 7 étant prévu au niveau de l'actionneur de manière à inverser automatiquement le sens du déplacement.

10. Dispositif d'inversion comprenant un bâti (10) et un corps (11) qui peut tourner autour d'un arbre d'inversion associé (12) par rapport au bâti, un premier et un second actionneurs à double effet (1, 2) étant également prévus, lesquels sont disposés entre le bâti et le corps pouvant tourner de manière à faire tourner le corps, les actionneurs (1, 2) ayant chacun une orientation différente, de manière à ce que, au cours du processus, pendant l'opération d'inversion, le sens de déplacement des actionneurs doive être inversé, et un ensemble soupape (20, 20') selon une ou plusieurs des revendications 1 à 7 étant prévu au niveau de chacun des actionneurs, de manière à inverser automatiquement le sens du déplacement.

11. Dispositif d'inversion selon la revendication 10, dans lequel le corps pouvant tourner est une charrue.

12. Dispositif de charrue réversible, comprenant une charrue qui peut tourner autour d'un axe d'inversion, un dispositif d'inversion hydraulique muni d'un ensemble soupape selon une ou plusieurs des revendications 1 à 7 étant prévu dans le but d'inverser la charrue.
